# EUROPEAN PATENT APPLICATION

(11) **EP 4 429 324 A1**
(43) Date of publication of application: **11.09.2024**
(21) Application number: 22889218.8
(22) Date of filing: 31.10.2022
(51) Int. Cl.: H04W 36/00

(54) **HANDOVER METHOD, AND TERMINAL AND NETWORK-SIDE DEVICE**

(30) Priority: 03.11.2021 CN 202111295866
(71) Applicant: Vivo Mobile Communication Co., Ltd., Dongguan, Guangdong 523863 (CN)
(72) Inventor: ZHANG, Hongping, Dongguan, Guangdong 523863 (CN)
(74) Representative: Lavoix
(86) International application number: PCT/CN2022/128495
(87) International publication number: WO 2023/078193

(57) **Abstract**

The present application belongs to the field of communications. Disclosed are a handover method, and a terminal and a network-side device. The handover method of the embodiments of the present application includes: a first access network device acquiring first information, wherein the first information comprises sensing measurement indication information and/or sensing assisted handover information, the sensing measurement indication information is used for indicating that a terminal is executing a sensing measurement task, the sensing assisted handover information is used for assisting the first access network device with performing cell handover for the terminal, and the first access network device is a service access network device for the terminal; and the first access network device performing cell handover on the basis of the sensing measurement indication information and/or the sensing assisted handover information.

## Description

### CROSS-REFERENCE TO RELATED APPLICATIONS

The present application claims the priority of Chinese Patent Application No. 202111295866.6 filed on November 03, 2021, the entire content of which is hereby incorporated by reference.

### TECHNICAL FIELD

The present application belongs to the field of communications, and particularly relates to a handover method, and a terminal and a network-side device.

### BACKGROUND

For future mobile communication systems, such as a B5G (Beyond 5^{th} Generation) system, and a 6G system, in addition to having a communication capability, they will also have a perception capability. The "perception capability" may be understood as: one or more devices with the perception capability can detect, track, recognize and image target objects, events or environments through transmission and reception of wireless signals.

However, considering that cell handover is performed on the basis of measurement results of communication signals in the related art, and then, if cell handover occurs when the terminal is executing sensing measurement, it may cause the terminal to be unable to continue performing sensing measurement, thereby failing to ensure continuity of sensing measurement services.

### SUMMARY

Embodiments of the present application provide a handover method, a terminal and a network-side device, which can solve the problem of failing to ensure continuity of sensing measurement services caused by cell handover of a terminal.

In a first aspect, a handover method is provided, and includes: a first access network device acquiring first information, where the first information includes sensing measurement indication information and/or sensing assisted handover information, the sensing measurement indication information is used for indicating that a terminal is executing a sensing measurement task, the sensing assisted handover information is used for assisting the first access network device with performing cell handover for the terminal, and the first access network device is a service access network device for the terminal; and the first access network device performing cell handover on the basis of the sensing measurement indication information and/or the sensing assisted handover information.

In a second aspect, a cell handover method is provided, and includes: a sensing server sending first information to a first access network device in a case of sending a sensing measurement task message to a terminal. The first access network device is a service access network device for the terminal, the first information includes sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

In a third aspect, a cell handover method is provided, and includes: a terminal receiving a sensing measurement task from a sensing server; and the terminal sending first information to a first access network device. The first access network device is a service access network device for the terminal, the first information includes sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

In a fourth aspect, a handover apparatus is provided and applied to a first access network device, and includes: an acquiring module, configured to acquire first information, where the first information includes sensing measurement indication information and/or sensing assisted handover information, the sensing measurement indication information is used for indicating that a terminal is executing a sensing measurement task, the sensing assisted handover information is used for assisting the first access network device with performing cell handover for the terminal, and the first access network device is a service access network device for the terminal; and a handover module, configured to perform cell handover on the basis of the sensing measurement indication information and/or the sensing assisted handover information.

In a fifth aspect, a cell handover apparatus is provided and applied to a sensing server, and includes: a first transmission module, configured to send first information to a first access network device in a case of sending a sensing measurement task message to a terminal. The first access network device is a service access network device for the terminal, the first information includes sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

In a sixth aspect, a cell handover apparatus is provided and applied to a terminal, and includes: a second transmission module, configured to receive a sensing measurement task from a sensing server, and send first information to a first access network device. The first access network device is a service access network device for the terminal, the first information includes sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

In a seventh aspect, a terminal is provided, and includes a processor, a memory, and a program or instruction stored on the memory and capable of running on the processor, the program or instruction, when executed by the processor, implementing steps of the method as described in the third aspect.

In an eighth aspect, a terminal is provided and includes a processor and a communication interface, where the communication interface is coupled to the processor, and the processor is configured to run a program or instruction to implement steps of the method as described in the third aspect.

In a ninth aspect, a network-side device is provided and includes a processor, a memory, and a program or instruction stored on the memory and capable of running on the processor, the program or instruction, when executed by the processor, implementing steps of the method as described in the first or second aspect.

In a tenth aspect, a network-side device is provided and includes a processor and a communication interface, where the communication interface is coupled to the processor, and the processor is configured to run a program or instruction to implement steps of the method as described in the first or second aspect.

In an eleventh aspect, a readable storage medium is provided and stores a program or instruction, the program or instruction, when executed by a processor, implementing steps of the method as described in the first aspect, or steps of the method as described in the second aspect, or steps of the method as described in the third aspect.

In a twelfth aspect, a chip is provided and includes a processor and a communication interface, where the communication interface is coupled to the processor, and the processor is configured to run a program or instruction to implement steps of the method as described in the first aspect, or implement steps of the method as described in the second aspect, or implement steps of the method as described in the third aspect.

In a thirteenth aspect, a computer program product/program product is provided and stored in a non-transitory storage medium, and implements, when executed by at least one processor, steps of the method as described in the first aspect, or implements steps of the method as described in the second aspect, or implements steps of the method as described in the third aspect.

In the embodiments of the present application, the first access network device acquires the first information including sensing measurement indication information and/or sensing assisted handover information, and performs cell handover according to the sensing measurement indication information and/or the sensing assisted handover information, therefore, the first access network device knows the sensing measurement task being executed on the terminal, thereby avoiding the problem of failing to ensure the continuity of sensing measurement services caused by cell handover of the terminal.

### BRIEF DESCRIPTION OF THE DRAWINGS

FIG. 1 is a schematic structural diagram of a wireless communication system provided by an exemplary embodiment of the present application.
FIG. 2 is a first schematic flowchart of a handover method provided by an exemplary embodiment of the present application.
FIG. 3 is a second schematic flowchart of a handover method provided by an exemplary embodiment of the present application.
FIG. 4 is a schematic interactive flowchart of a handover method provided by an exemplary embodiment of the present application.
FIG. 5 is a third schematic flowchart of a handover method provided by an exemplary embodiment of the present application.
FIG. 6 is a fourth schematic flowchart of a handover method provided by an exemplary embodiment of the present application.
FIG. 7 is a first schematic structural diagram of a handover apparatus provided by an exemplary embodiment of the present application.
FIG. 8 is a second schematic structural diagram of a handover apparatus provided by an exemplary embodiment of the present application.
FIG. 9 is a third schematic structural diagram of a handover apparatus provided by an exemplary embodiment of the present application.
FIG. 10 is a schematic structural diagram of a terminal provided by an exemplary embodiment of the present application.
FIG. 11 is a schematic structural diagram of a network-side device provided by an exemplary embodiment of the present application.

### DETAILED DESCRIPTION

The technical solutions in embodiments of the present application are clearly and completely described in the following with reference to accompanying drawings in the embodiments of the present application. Apparently, the described embodiments are some rather than all of the embodiments of the present application. All other embodiments obtained by those ordinarily skilled in the art based on the embodiments of the present application fall within the protection scope of the present application.

The specification and claims of the present application, and terms "first" and "second" are used to distinguish similar objects, but are unnecessarily used to describe a specific sequence or order. It is to be understood that terms used in this way are exchangeable in a proper case, so that the embodiments of the present application can be implemented in an order different from the order shown or described herein. Objects distinguished by "first" and "second" are usually of the same type, and the number of objects is not limited, for example, there may be one first object or a plurality of first objects. In addition, "and/or" used in this specification and the claims represents at least one of the connected objects, and the character "/" generally represents that associated objects in front of and behind it are in an "or" relationship.

It is worth noting that the technologies described in the embodiments of this application are not limited to an LTE-advanced (LTE-Advanced, LTE-A) system of long term evolution (Long Term Evolution, LTE)/LTE, and may also be applied to other wireless communication systems, such as a code division multiple access (Code Division Multiple Access, CDMA), a time division multiple access (Time Division Multiple Access, TDMA), a frequency division multiple access (Frequency Division Multiple Access, FDMA), an orthogonal frequency division multiple access (Orthogonal Frequency Division Multiple Access, OFDMA), a single-carrier frequency-division multiple access (Single Carrier Frequency Division Multiple Access, SC-FDMA) and other systems. The terms "system" and "network" in the embodiments of this application are often interchangeably used, and the described technologies may be applied to the systems and radio technologies mentioned above, and may also be applied to other systems and radio technologies. The following description describes a new radio (New Radio, NR) system for example objectives, and the NR terms are used in most of the following descriptions. However, these technologies may also be applied to applications other than NR system applications, such as a 6^{th} generation (6^{th} Generation, 6G) communication system.

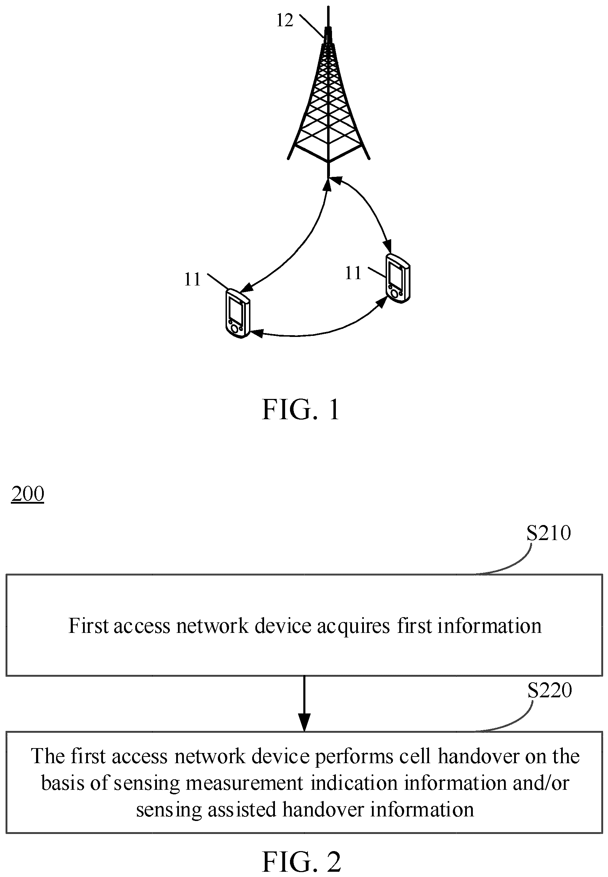

FIG. 1 is a schematic structural diagram of a wireless communication system applicable to an embodiment of the present application. The wireless communication system includes a terminal 11 and a network-side device 12. The terminal 11 may also be called a terminal device or user equipment (User Equipment, UE) and may be a mobile phone, a tablet personal computer (Tablet Personal Computer), a laptop computer (Laptop Computer), or called a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), or vehicle user equipment (VUE), pedestrian user equipment (PUE) or other terminal side devices. The wearable device includes: a smart watch, a wristband, an ear phone, glasses and the like. It needs to be noted that, the specific type of the terminal 11 is not limited in the embodiments of the present application. The network-side device 12 may be a base station or a core network, the base station may be called a node B, an evolution node B, an access point, a base transceiver station (Base Transceiver Station, BTS), a radio base station, a radio transceiver, a basic service set (Basic Service Set, BSS), an extended service set (Extended Service Set, ESS), a B node, an evolution B node (eNB), a home B node, a home evolution B node, a WLAN access point, a WiFi node, a transmitting receiving point (Transmitting Receiving Point, TRP) or another suitable term in the field, as long as the same technical effects are achieved, the base station is not limited to specific technical vocabulary. It needs to be noted that, only a base station in an NR system is used as an example in the embodiments of the present application, but a specific type of the base station is not limited.

The technical solutions provided by the embodiments of the present application are described in detail through some embodiments and their application scenarios in the following with reference to the accompanying drawings.

As shown in FIG. 2, which is a schematic flowchart of a handover method 200 provided by an exemplary embodiment of the present application. The method 200 may be executed by, but not limited to, a first access network device, and may be executed specifically by hardware and/or software mounted in the first access network device. In this embodiment, the method 200 may at least include the following steps.

It may be understood that the first access network device mentioned in the context of the present application may be a service access network device that is providing services for a terminal, such as a source (Source) base station, or a service access network device that is about to provide services for a handed-over terminal, such as a target (Target) base station, which is not limited here in this embodiment.

S210, the first access network device acquires first information.

The first information is related to a sensing measurement task executed by the terminal.

In this embodiment, the sensing measurement task may be issued to the terminal by a sensing server in a way of a sensing measurement task message (which may include information such as sensing measurement configuration), so as to trigger the terminal to perform sensing measurement. It may be understood that in the related art, although the sensing server needs to forward the sensing measurement task to the terminal through a service base station (such as the first access network device) when issuing the sensing measurement task, since the sensing measurement task message is a sensing protocol message, such as an SP1 (Sending Protocol 1) message, the sensing measurement task message is transparent to the service base station, that is, the service base station does not know that the terminal has received the sensing measurement task issued by the sensing server.

In this case, in order to avoid the problem of failing to ensure the continuity of the sensing measurement services caused by cell handover of the terminal, the first access network device may clearly understand the sensing measurement task being executed on the terminal by acquiring the first information, and be handed over to a suitable target cell accordingly. Therefore, in this embodiment, the first information at least may include the sensing measurement indication information and/or the sensing assisted handover information.

The sensing measurement indication information is used for indicating that the terminal is executing the sensing measurement task. The sensing measurement indication information may be one piece of explicit indication information, for example, the sensing measurement indication information may perform explicit indication through 1 bit, for example, when a value is 1, it indicates that the terminal is executing the sensing measurement task, or there is a measurement task that needs to be executed; or, the sensing measurement indication information may also be one piece of implicit indication information, for example, the terminal sends the first information or the terminal sends the sensing assisted handover information, which indicates that the terminal is executing the sensing measurement task, or there is the measurement task that needs to be executed.

Optionally, an indication mode of the sensing measurement indication information may be implemented by protocol agreement or high-level configuration, which is not limited here in this embodiment.

The sensing assisted handover information is used for assisting the first access network device (such as the source base station or the target base station) with performing cell handover for the terminal, for example, the terminal is handed over from a current service cell (also may be understood as a source cell) to a target cell, etc.

Of course, in this embodiment, according to different communication scenarios, there may be multiple ways for the first access network device to acquire the first information. In one implementation, the way for the first access network device to acquire the first information may include at least one of the following (11) to (13).

(11) The first access network device receiving the first information from the terminal,

where, when the first access network device serves as a service base station (also may be understood as: a source service access network device or a source base station), the terminal may send the first information to the first access network device in a case of receiving a sensing measurement task issued by a sensing server, so that the first access network device acquires the first information;

or, when the first access network device serves as a target base station (also may be understood as: a target service access network device), the terminal may send the first information to the first access network device after being handed over from a third access device (such as the source base station) to the first access network device, so that the first access network device acquires the first information.

(12) The first access network device receiving the first information from a sensing server,

where, when the first access network device serves as a service base station, the sensing server may send the first information to the first access network device in a case of issuing a sensing measurement task to the terminal, so that the first access network device acquires the first information.

(13) The first access network device receiving a first handover request message from a third access network device, the first handover request message including the first information,

where, when the first access network device serves as a target base station, the third access network device serves as a source base station, and the third access network device may send the first handover request message carrying the first information to the first access network device when determining to perform cell handover, so that the first access network device acquires the first information.

It needs to be noted that, a service frequency point of the first access network device may change depending on the role it plays in handover scenarios, and therefore, the first information (such as sensing assisted handover information) acquired by the first access network device may be different or the same. For example, the first information acquired when the first access network device serves as the source base station may be different from or the same as the first information acquired when the first access network device serves as the target base station, which is not limited here.

Further, in one implementation, the first information may be transmitted in a way of radio resource control (Radio Resource Control, RRC) UE assistance information (UE Assistance Information), that is, the first access network device receives the RRC UE assistance information, and the RRC UE assistance information includes the first information and/or the second information.

Or, the first information may also be transmitted through a newly introduced RRC message for interactive sensing information transmission, which is not limited here in this embodiment.

It needs to be noted that this embodiment does not limit an actual type of the sensing measurement task. For example, according to different sensing purposes, the sensing measurement task may include two types. One type is sensing being used for assisting communication or enhancing communication performance, for example, a base station provides a more accurate beamforming alignment device by tracking a movement trajectory of a device; and the other type is sensing being not directly related to communication, for example, the base station monitors weather conditions through wireless signals, a mobile phone recognizes gestures of a user through millimeter wave wireless sensing, etc.

S220, the first access network device performing cell handover on the basis of the sensing measurement indication information and/or the sensing assisted handover information.

When the first access network device performs cell handover on the basis of the sensing measurement indication information and/or the sensing assisted handover information, whether to perform cell handover may be determined according to the sensing measurement indication information and/or the sensing assisted handover information, or a to-be-handed-over target cell/target frequency is determined according to the sensing measurement indication information and/or the sensing assisted handover information, or a handover occasion of the target cell is determined according to the sensing measurement indication information and/or the sensing assisted handover information, which is not limited here in this embodiment.

In this embodiment, the first access network device acquires the first information including the sensing measurement indication information and/or the sensing assisted handover information, and performs cell handover according to the sensing measurement indication information and/or the sensing assisted handover information, therefore, the first access network device knows that the terminal is executing the sensing measurement task, thereby avoiding the problem of failing to ensure the continuity of the sensing measurement services caused by cell handover of the terminal.

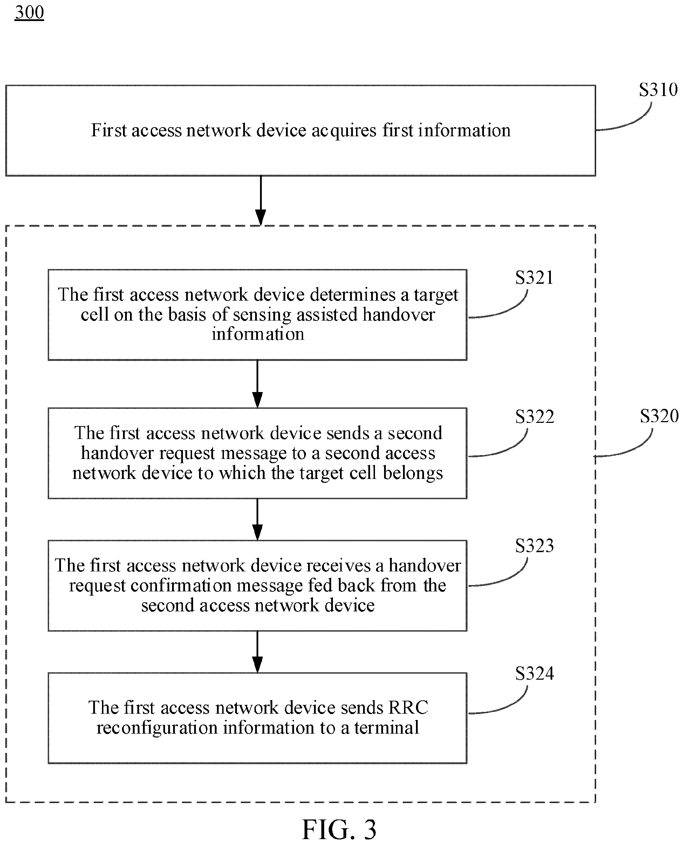

As shown in FIG. 3, which is a schematic flowchart of a handover method 300 provided by an exemplary embodiment of the present application. The method 300 may be executed by, but not limited to, a first access network device, and may be executed specifically by hardware and/or software mounted in the first access network device. In this embodiment, the method 300 may at least include the following steps.

S310, the first access network device acquires first information.

The first information includes sensing measurement indication information and/or sensing assisted handover information, the sensing measurement indication information is used for indicating that a terminal is executing a sensing measurement task, the sensing assisted handover information is used for assisting the first access network device with performing cell handover for the terminal, and the first access network device is a service access network device for the terminal.

It may be understood that an implementation process of S310 may refer to relevant description of the method embodiment 200, besides, as a possible implementation, the first access network device (such as a source base station) may perform mobility management on the basis of the sensing assisted handover information. Based on this, the sensing assisted handover information may include at least one of the following (21) to (27).

(21) A frequency point of a sensing signal, the sensing signal being used for the terminal to execute the sensing measurement task.

(22) A first list, including at least one candidate frequency, the candidate frequency being a candidate target frequency of the terminal performing cell handover,
where, the first list may be understood as a candidate handover target frequency list that can support sensing characteristics.

Optionally, the first list may further include priority information of a target frequency, and the priority information may be an implicit priority, for example, each candidate frequency in the first list may be arranged in a priority order from high to low or from low to high.

(23) A second list, including at least one candidate cell, the candidate cell being a candidate target cell of the terminal performing cell handover,
where, similar to the first list, the second list may be understood as a candidate handover target cell list that can support sensing characteristics.

Optionally, the second list may further include priority information of a target cell, and the priority information may be an implicit priority, for example, each candidate cell in the second list may be arranged in a priority order from high to low or from low to high.

(24) A third list, including at least one first frequency, the first frequency being a frequency to which the terminal is prohibited from being handed over,
where, the third list may be understood as a target frequency blacklist. That is, after the terminal is handed over to any first frequency included in the third list, it may be caused that the terminal cannot continue to perform sensing measurement due to limitations in capabilities of a transceiver and the like.

(25) A fourth list, including at least one second cell, the second cell being a cell to which the terminal is prohibited from being handed over,
where, similar to the third list, the fourth list may be understood as a target cell blacklist. That is, after the terminal is handed over to any second cell included in the fourth list, it may be caused that the terminal cannot continue to perform sensing measurement due to limitations in capabilities of a transceiver and the like.

(26) A data transmission rate reported by estimated sensing data, the sensing data corresponding to the sensing measurement task, where, the sensing data corresponding to the sensing measurement task may be understood as: data obtained when the terminal executes sensing measurement, namely the sensing data.

(27) An address of the sensing server,
where, the address of the sensing server may be a physical address or logical address of the sensing server, which is not limited in this embodiment.

It may be understood that all information contents included in the sensing assisted handover information may be implemented by protocol agreement or high-level configuration, which is not limited here.

Further, in the related art, if there is no data transmission between the terminal and the service base station (such as the first access network device) within a certain period of time (a duration of an inactivity timer (inactivity timer), also known as an inactive timer), then in order to save power, the service base station generally enables the terminal to be in an inactive state and/or idle state after timeout of the inactivity timer. However, considering that the terminal requires a certain period of time for performing sensing measurement, that is, there may be no data transmission between the terminal and the service base station within this period of time, and then, if the service base station (namely a source base station) enables the terminal to be in the inactive state or the idle state, it will inevitably affect the execution of the sensing measurement task. In this case, as an optional implementation, after the first access network device knows that the terminal is executing the sensing measurement task through the first information, the terminal may be controlled to maintain an RRC connected state based on the first information (such as the sensing measurement indication information), that is, the terminal is not enabled to be in the inactive state and/or the idle state.

Of course, the step of the first access network device controlling the terminal to maintain the RRC connected state, may include any one of the following (31) to (32):
(31) stopping the inactivity timer, where, "stopping" may also be understood as not starting, pausing, shutdown, canceling and the like; and
(32) ignoring timeout of the inactivity timer, that is, the first access network device does not stop the inactivity timer, but when the inactivity timer times out, an operation of enabling the terminal to perform state transition is not executed, for example, the terminal is not enabled to be in the inactive state and/or the idle state.

In the above implementation, after the first access network device knows that the terminal is executing the sensing measurement task, by controlling the terminal to maintain the RRC connected state, the terminal effectively saves the flow of entering the RRC connected state, reduces delay and ensures reliability of wireless communication when the sensing data needs to be transmitted.

It needs to be noted that, after the first access network device knows that the terminal is executing the sensing measurement task through the first information, the terminal may be controlled to maintain the RRC connected state based on the first information (which may be used as an independent implementation solution), or it may be implemented together with subsequent steps.

S320, the first access network device performs cell handover on the basis of the sensing measurement indication information and/or the sensing assisted handover information.

It may be understood that an implementation process of S320 may refer to the relevant description of the method embodiment 200, besides, as a possible implementation, please refer to FIG. 3 again, the implementation process of S320 at least may include the following S321 to S324, as follows.

S321, the first access network device determines a target cell on the basis of the sensing assisted handover information.

For example, when a signal of a service cell of the terminal becomes worse, the source base station (namely the first access network device) preferably selects a cell in the candidate handover target frequency list (namely the first list)/target cell list (namely the second list) as the target cell. For another example, when the data transmission rate reported by the estimated sensing data is large, the source base station preferably selects a cell with a small load as the target cell, so as to avoid that handover is rejected or the data transmission rate requirement reported by the sensing data cannot be met after being handed over to the target cell.

In addition, the first access network device can not only determine the target cell based on the sensing assisted handover information, but also determine radio resource management (radio resource management, RRM) measurement configuration information based on the sensing assisted handover information.

For example, for a measurement triggering condition, a triggering condition of the cells in the frequency/target cell list (namely the second list) in the candidate or high-priority handover target frequency list (namely the first list) are set to be lower, so as to make it easier to trigger measurement reporting. For another example, the frequencies in the target frequency blacklist (namely the third list) are not carried in the measurement configuration (that is, UE is not configured to measure these frequencies), and the target cell blacklist (namely the fourth list) is used as a measurement blacklist.

S322, the first access network device sends a second handover request message to a second access network device to which the target cell belongs,
where, the second handover request message carries relevant information of the target cell, so that the second access network device determines whether to receive (or accept) the second handover request message.

In addition, considering that in order to achieve that after the terminal is handed over to the second access network device (namely the target base station), the target base station may execute operations similar to the source base station in subsequent handover to ensure smooth performing of a handover flow and the sensing measurement task, the second access network device may also acquire the sensing measurement indication information and/or the sensing assisted handover information.

Based on this, as an implementation, the way for the target base station to acquire the sensing measurement indication information and/or the sensing assisted handover information may include at least one of the following (41) to (42).

(41) The second handover request message sent by the first access network device (namely the source base station) being capable of carrying the sensing measurement indication information and/or the sensing assisted handover information, so that the target base station is enabled to acquire the sensing measurement indication information and/or the sensing assisted handover information.

(42) The terminal sending the first information carrying the sensing measurement indication information and/or the sensing assisted handover information to the target base station after being handed over to the target base station, so that the target base station is enabled to acquire the sensing measurement indication information and/or the sensing assisted handover information.

It needs to be noted that since the terminal is handed over from the first access network device (namely the source base station) to the second access network device (namely the target base station), a service frequency point may change. Therefore, the sensing assisted handover information carried in the first information sent to the first access network device by the terminal may be different from the sensing assisted handover information carried in the first information sent to the second access network device by the terminal, for example, the first list and the second list in the first information may be different.

S323, the first access network device receives a handover request confirmation message fed back from the second access network device,
where, the second access network device feeds back the handover request confirmation message to the first access network device in a case of receiving the second handover request message.

S324, the first access network device sends RRC reconfiguration information to the terminal,
where, the RRC reconfiguration information is used for the terminal to perform cell handover, such as commanding the terminal to be handed over to the target cell, and based on this, the terminal may be handed over to the target cell after receiving the RRC reconfiguration information.

Optionally, after the terminal is handed over to the target cell, the terminal or the second access network device (corresponding to the target cell) may send third information to a sensing server, the third information may carry target cell information, such as an identifier, a frequency point or other information of the target cell, and the sensing server determines updated sensing measurement configuration according to the target cell information, or determines whether the sensing measurement task is suitable for the target cell; and the sensing server sends fourth information to the terminal, where, the fourth information includes sensing measurement stop information or the updated sensing measurement configuration.

For example, if the sensing server determines that sensing measurement is only suitable for measurement at a source base station/source cell based on the target cell information, the sensing server determines to stop the sensing measurement task, and then sends the sensing measurement stop information to the terminal, that is, the fourth information includes the sensing measurement stop information.

For another example, if the sensing server determines the updated sensing measurement configuration based on the target cell information, then the sensing server sends the updated sensing measurement configuration to the terminal, that is, the fourth information includes the updated sensing measurement configuration.

In this case, the terminal may stop executing the sensing measurement task according to the sensing measurement stop information included in the fourth information, or the terminal executes the sensing measurement task according to the updated sensing measurement configuration included in the fourth information.

Further, in addition to the above handover process, in an implementation, the first access network device may further acquire second information, and the second information is used for indicating that the sensing measurement task executed by the terminal ends. That is, when the terminal finishes the sensing measurement task, the terminal or the sensing server may send the second information to a current service base station (such as the source base station or the target base station) of the terminal, and the second information is used for indicating that the terminal finishes sensing measurement or the sensing measurement task. For example, the second information may be 1 bit, and when a value is 0, it indicates that the terminal finishes sensing measurement or the sensing measurement task.

Optionally, similar to the first information described in the above method embodiment 200, the second information may also be transmitted through RRC UE assistance information, for example, the RRC UE assistance information includes the second information.

In this embodiment, the source base station acquires the sensing assisted handover information from the terminal or the sensing server, and is handed over to a suitable target cell accordingly, so as to ensure the continuity of the sensing measurement services during handover.

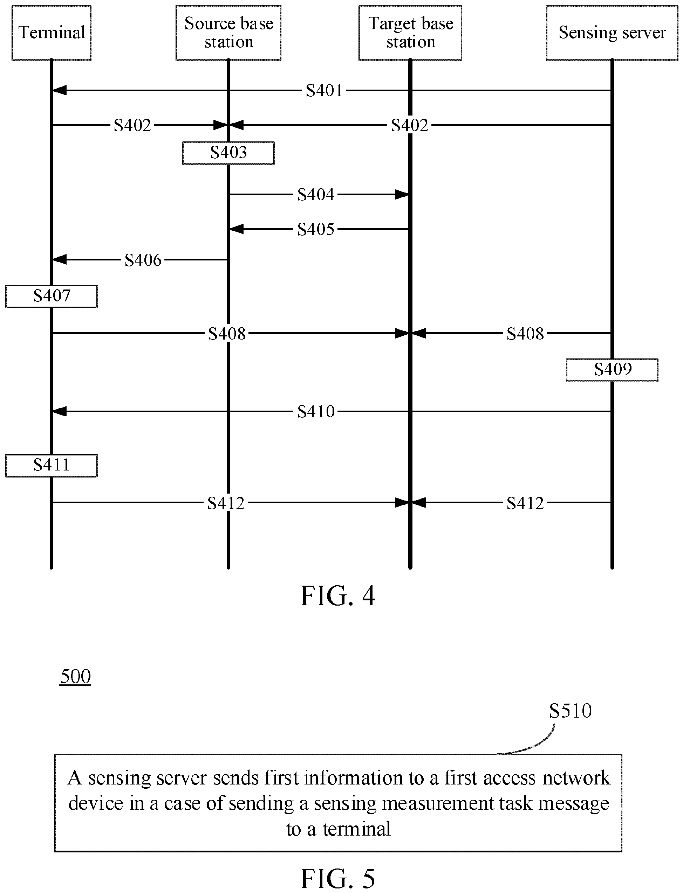

Based on the description of the above method embodiment 200 and/or 300, the handover process given in the present application is further described below with reference to FIG. 4, contents of which are as follows.

S401, a sensing server issues a sensing measurement task to a terminal.

S402, the terminal sends first information to a source base station, and/or the sensing server sends the first information to the source base station.

S403, the source base station determines a target cell according to sensing assisted handover information included in the first information in a case of determining to perform handover.

S404, the source base station sends a handover request message to a target base station.

S405, the target base station feeds back a handover request confirmation message to the source base station in a case of determining to receive the handover request message.

S406, the source base station sends RRC reconfiguration information to the terminal in a case of receiving the handover request confirmation message.

S407, the terminal performs target cell handover according to the RRC reconfiguration information, namely being handed over from the source base station to the target base station.

S408, after the terminal is handed over to the target base station, the terminal sends third information to the sensing server, and/or, the target base station sends the third information to the sensing server, the third information carrying target cell information.

S409, the sensing server determines updated sensing measurement configuration according to the target cell information carried in the third information, or determines whether the sensing measurement task is suitable for the target cell.

S410, the sensing server sends fourth information to the terminal, where the fourth information includes sensing measurement stop information or the updated sensing measurement configuration.

S411, the terminal stops executing the sensing measurement task according to the sensing measurement stop information included in the fourth information, or the terminal executes the sensing measurement task according to the updated sensing measurement configuration included in the fourth information.

S412, after execution of the sensing measurement task ends, the terminal and/or the sensing server send/sends second information to the target base station.

It may be understood that the handover process given in this embodiment may include more or fewer steps than the above S401 to S412, and the implementation process of the above S401 to S412 may refer to the relevant description in the method embodiment 200 and/or 300, and achieve the same or corresponding technical effects, which will not be repeated here for avoidance of repetition.

As shown in FIG. 5, which is a schematic flowchart of a handover method 500 provided by an exemplary embodiment of the present application. The method 500 may be executed by, but not limited to, a sensing server, and may be executed specifically by hardware and/or software mounted in the sensing server. In this embodiment, the method 500 may at least include the following steps.

S510, the sensing server sends first information to a first access network device in a case of sending a sensing measurement task message to a terminal.

The first access network device is a service access network device for the terminal, the first information includes sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

In an implementation, the sensing assisted handover information includes at least one of the following: a frequency point of a sensing signal, the sensing signal being used for the terminal to execute the sensing measurement task; a first list, including at least one candidate frequency, the candidate frequency being a candidate target frequency of the terminal performing cell handover; a second list, including at least one candidate cell, the candidate cell being a candidate target cell of the terminal performing cell handover; a third list, including at least one first frequency, the first frequency being a frequency to which the terminal is prohibited from being handed over; a fourth list, including at least one second cell, the second cell being a cell to which the terminal is prohibited from being handed over; a data transmission rate reported by estimated sensing data, the sensing data corresponding to the sensing measurement task; and an address of the sensing server.

In an implementation, after the step of sending the first information to the first access network device, the method further includes: the sensing server sending second information to the first access network device, the second information being used for indicating that the sensing measurement task executed by the terminal ends.

In an implementation, after the step of sending the first information to the first access network device, the method further includes: the sensing server receiving third information from the terminal or a second access network device, where the third information at least carries target cell information updated by the terminal, the first access network device is a source service access network device of the terminal, and the second access network device is a target service access network device of the terminal; the sensing server determining updated sensing measurement configuration according to the target cell information, or determining whether the sensing measurement task is suitable for a target cell; and the sensing server sending fourth information to the terminal, where, the fourth information includes sensing measurement stop information or the updated sensing measurement configuration.

It may be understood that the implementation process of each implementation mentioned in this method embodiment 500 may refer to the relevant description in the method embodiments 200 to 400, and achieve the same or corresponding technical effects, which will not be limited in this embodiment for avoidance of repetition.

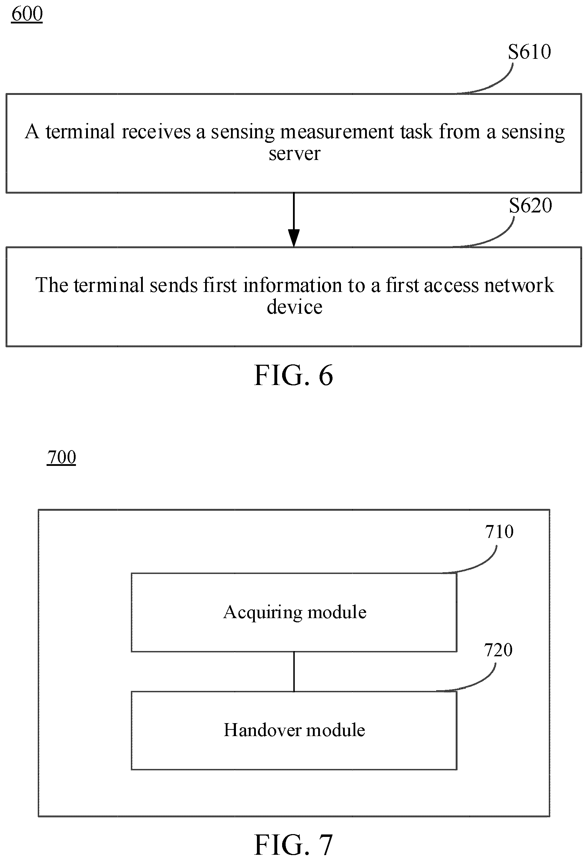

As shown in FIG. 6, which is a schematic flowchart of a handover method 600 provided by an exemplary embodiment of the present application. The method 600 may be executed by, but not limited to, a terminal, and may be executed specifically by hardware and/or software mounted in the terminal. In this embodiment, the method 600 may at least include the following steps.

S610, a terminal receives a sensing measurement task from a sensing server.

S620, the terminal sends first information to a first access network device.

The first access network device is a service access network device for the terminal, the first information includes sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

In an implementation, the sensing assisted handover information includes at least one of the following: a frequency point of a sensing signal, the sensing signal being used for the terminal to execute the sensing measurement task; a first list, including at least one candidate frequency, the candidate frequency being a candidate target frequency of the terminal performing cell handover; a second list, including at least one candidate cell, the candidate cell being a candidate target cell of the terminal performing cell handover; a third list, including at least one first frequency, the first frequency being a frequency to which the terminal is prohibited from being handed over; a fourth list, including at least one second cell, the second cell being a cell to which the terminal is prohibited from being handed over; a data transmission rate reported by estimated sensing data, the sensing data corresponding to the sensing measurement task; and an address of the sensing server.

In an implementation, after the step of sending the first information to the first access network device, the method further includes: the terminal sending second information to the first access network device, the second information being used for indicating that the sensing measurement task executed by the terminal ends.

In an implementation, the first information and/or the second information are/is transmitted through RRC UE assistance information.

In an implementation, after the step of sending the first information to the first access network device, the method further includes: the terminal sending third information to the sensing server in a case of completing target cell handover according to an RRC reconfiguration message from the first access network device, the third information at least carrying target cell information updated by the terminal.

In an implementation, after the step of sending the third information to the sensing server, the method further includes: in a case of receiving the fourth information from the sensing server, the terminal stopping executing the sensing measurement task according to the sensing measurement stop information included in the fourth information, or the terminal executing the sensing measurement task according to the updated sensing measurement configuration included in the fourth information.

It may be understood that the implementation process of each implementation mentioned in this method embodiment 600 may refer to the relevant description in the method embodiments 200 to 400, and achieve the same or corresponding technical effects, which will not be limited in this embodiment for avoidance of repetition.

It needs to be noted that, an executive body of the handover methods 200 to 600 provided by the embodiments of the present application may be a handover apparatus or a control module which is in the handover apparatus and is used for executing the handover methods. In the embodiments of the present application, the handover apparatus provided by the embodiments of the present application is described by taking the handover apparatus executing the handover methods as an example.

As shown in FIG. 7, which is a schematic structural diagram of a handover apparatus 700 provided by an exemplary embodiment of the present application. The handover apparatus 700 includes an acquiring module 710, configured to acquire first information, where the first information includes sensing measurement indication information and/or sensing assisted handover information, the sensing measurement indication information is used for indicating that a terminal is executing a sensing measurement task, the sensing assisted handover information is used for assisting the first access network device with performing cell handover for the terminal, and the first access network device is a service access network device for the terminal; and a handover module 720, configured to perform cell handover on the basis of the sensing measurement indication information and/or the sensing assisted handover information.

In an implementation, the step of the acquiring module 710 acquiring the first information, includes at least one of the following: the acquiring module 710 receiving the first information from the terminal; the acquiring module 710 receiving the first information from a sensing server; and the acquiring module 710 receiving a first handover request message from a third access network device, the first handover request message including the first information.

In an implementation, the sensing assisted handover information includes at least one of the following: a frequency point of a sensing signal, the sensing signal being used for the terminal to execute the sensing measurement task; a first list, including at least one candidate frequency, the candidate frequency being a candidate target frequency of the terminal performing cell handover; a second list, including at least one candidate cell, the candidate cell being a candidate target cell of the terminal performing cell handover; a third list, including at least one first frequency, the first frequency being a frequency to which the terminal is prohibited from being handed over; a fourth list, including at least one second cell, the second cell being a cell to which the terminal is prohibited from being handed over; a data transmission rate reported by estimated sensing data, the sensing data corresponding to the sensing measurement task; and an address of the sensing server.

In an implementation, the step of the handover module 720 performing cell handover on the basis of the sensing measurement indication information and/or the sensing assisted handover information, includes: the handover module 720 determining a target cell on the basis of the sensing assisted handover information; the handover module 720 sending a second handover request message to a second access network device to which the target cell belongs; the handover module 720 receiving a handover request confirmation message fed back from the second access network device; and the handover module 720 sending radio resource control (RRC) reconfiguration information to the terminal, the RRC reconfiguration information being used for the terminal to perform cell handover.

In an implementation, the handover module 720 is further configured to determine radio resource management (RRM) measurement configuration information on the basis of the sensing assisted handover information.

In an implementation, the second handover request message at least carries the sensing measurement indication information and/or the sensing assisted handover information.

In an implementation, the handover module 720 is further configured to control the terminal to maintain a radio resource control (RRC) connected state on the basis of the sensing measurement indication information.

In an implementation, the step of the handover module 720 controlling the terminal to maintain the RRC connected state, includes at least one of the following: stopping an inactivity timer; and ignoring timeout of the inactivity timer.

In an implementation, the acquiring module 710 is further configured to acquire second information, the second information being used for indicating that the sensing measurement task executed by the terminal ends.

In an implementation, the acquiring module 710 receives the second information from a sensing server and/or the terminal.

In an implementation, the first information and/or the second information are/is transmitted through RRC UE assistance information.

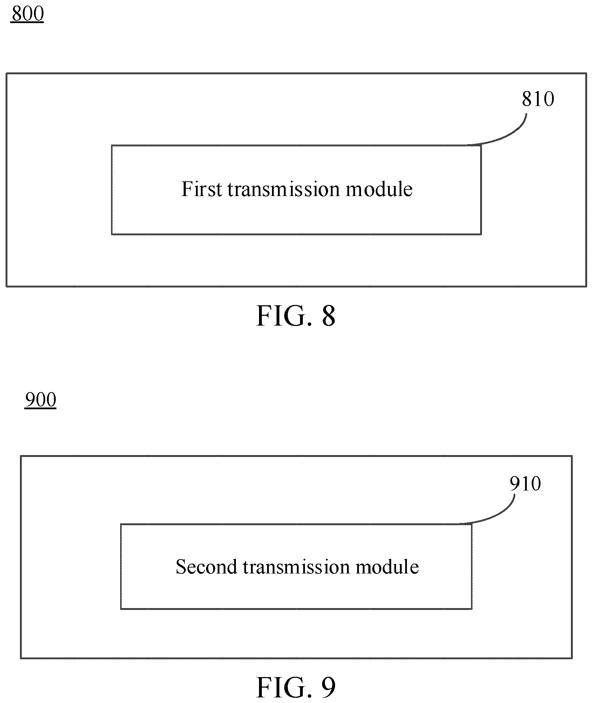

As shown in FIG. 8, which is a schematic structural diagram of a handover apparatus 800 provided by an exemplary embodiment of the present application. The handover apparatus 800 includes a first transmission module 810, configured to send first information to a first access network device in a case of sending a sensing measurement task message to a terminal. The first access network device is a service access network device for the terminal, the first information includes sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

In an implementation, the sensing assisted handover information includes at least one of the following: a frequency point of a sensing signal, the sensing signal being used for the terminal to execute the sensing measurement task; a first list, including at least one candidate frequency, the candidate frequency being a candidate target frequency of the terminal performing cell handover; a second list, including at least one candidate cell, the candidate cell being a candidate target cell of the terminal performing cell handover; a third list, including at least one first frequency, the first frequency being a frequency to which the terminal is prohibited from being handed over; a fourth list, including at least one second cell, the second cell being a cell to which the terminal is prohibited from being handed over; a data transmission rate reported by estimated sensing data, the sensing data corresponding to the sensing measurement task; and an address of the sensing server.

In an implementation, the first transmission module 810 is further configured to send second information to the first access network device, the second information being used for indicating that the sensing measurement task executed by the terminal ends.

In an implementation, the first transmission module 810 is further configured to receive third information from the terminal or a second access network device, where the third information at least carries target cell information updated by the terminal, the first access network device is a source service access network device of the terminal, and the second access network device is a target service access network device of the terminal; the apparatus 800 further includes a determining module 820, configured to determine updated sensing measurement configuration according to the target cell information, or determine whether the sensing measurement task is suitable for a target cell; and the first transmission module 810 is further configured to send fourth information to the terminal, where the fourth information includes sensing measurement stop information or the updated sensing measurement configuration.

The handover apparatuses 700 to 800 in the embodiments of the present application may be an apparatus, an apparatus or a network-side device with an operating system, or a component, an integrated circuit or a chip in the network-side device. These are not specifically limited in the embodiments of the present application.

The handover apparatuses 700 to 800 provided by the embodiments of the present application can implement various processes implemented in the method embodiments of FIG. 2 to FIG. 5 and achieve the same technical effects, which will not be repeated here for avoidance of repetition.

As shown in FIG. 9, which is a schematic structural diagram of a handover apparatus 900 provided by an exemplary embodiment of the present application. The handover apparatus 900 includes a second transmission module 910, configured to receive a sensing measurement task from a sensing server, and send first information to a first access network device. The first access network device is a service access network device for the terminal, the first information includes sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

In an implementation, the sensing assisted handover information includes at least one of the following: a frequency point of a sensing signal, the sensing signal being used for the terminal to execute the sensing measurement task; a first list, including at least one candidate frequency, the candidate frequency being a candidate target frequency of the terminal performing cell handover; a second list, including at least one candidate cell, the candidate cell being a candidate target cell of the terminal performing cell handover; a third list, including at least one first frequency, the first frequency being a frequency to which the terminal is prohibited from being handed over; a fourth list, including at least one second cell, the second cell being a cell to which the terminal is prohibited from being handed over; a data transmission rate reported by estimated sensing data, the sensing data corresponding to the sensing measurement task; and an address of the sensing server.

In an implementation, the second transmission module 910 is further configured to send second information to the first access network device, the second information being used for indicating that the sensing measurement task executed by the terminal ends.

In an implementation, the first information and/or the second information are/is transmitted through RRC UE assistance information.

In an implementation, the second transmission module 910 is further configured to send third information to the sensing server in a case of completing target cell handover according to an RRC reconfiguration message from the first access network device, the third information at least carrying target cell information updated by the terminal.

In an implementation, the second transmission module 910 is further configured to receive fourth information from the sensing server, the fourth information including sensing measurement stop information or updated sensing measurement configuration; and stop executing the sensing measurement task according to the sensing measurement stop information, or execute the sensing measurement task according to the updated sensing measurement configuration.

The handover apparatus 900 in the embodiment of the present application may be an apparatus, an apparatus or an electronic device with an operating system, or a component, an integrated circuit or a chip in the terminal. The apparatus or electronic device may be a mobile terminal, or may be a non-mobile terminal. For example, the mobile terminal may include, but is not limited to, types of the terminal 11 listed above, and the non-mobile terminal may be a server, a network attached storage (Network Attached Storage, NAS), a personal computer (personal computer, PC), a television (television, TV), a teller machine or a self-service machine or the like, which is not specifically limited in the embodiment of the present application.

The handover apparatus 900 provided by the embodiment of the present application can implement the processes implemented by the method embodiment of FIG. 6 and achieve the same technical effects, which will not be repeated here for avoidance of repetition.

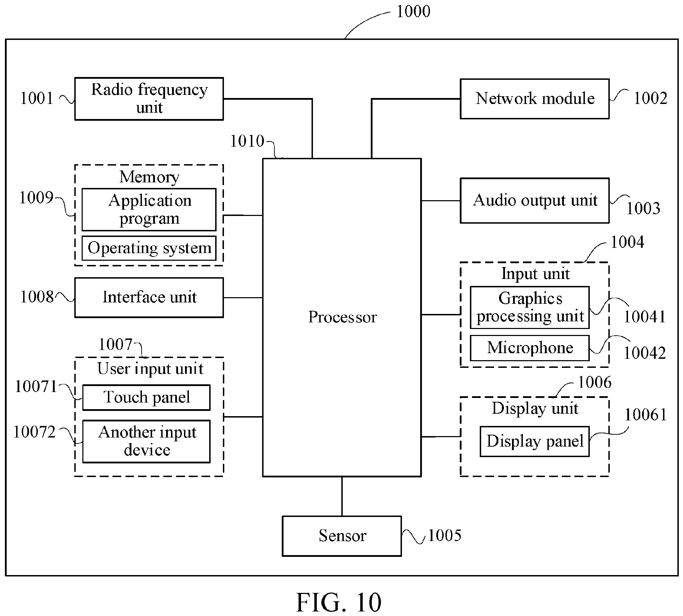

An embodiment of the present application further provides a terminal, including a processor and a communication interface, where the communication interface is coupled to the processor, and the processor is configured to run a program or instruction to implement steps of the method in the method embodiment 600. The terminal embodiment corresponds to the method embodiment of the terminal side, and the implementation processes and the implementations of the above method embodiment are applicable to this terminal embodiment, which can achieve the same technical effects. Specifically, FIG. 10 is a schematic structural diagram of hardware of a terminal for implementing embodiments of the present application.

The terminal 1000 includes, but is not limited to: at least parts of components in a radio frequency unit 1001, a network module 1002, an audio output unit 1003, an input unit 1004, a sensor 1005, a display unit 1006, a user input unit 1007, an interface unit 1008, a memory 1009, a processor 1010 and the like.

Those skilled in the art may understand that the terminal 1000 may further include a power supply (such as a battery) for supplying power to the components. The power supply may be logically connected to the processor 1010 by using a power management system, thereby implementing functions, such as charging, discharging, and power consumption management, by using the power management system. A terminal structure shown in FIG. 10 constitutes no limitation on the terminal, and the terminal may include more or fewer components than those shown in the figure, or some components may be combined, or a different component arrangement may be used, which will not be repeated here.

It is to be understood that in the embodiment of the present application, the input unit 1004 may include a graphics processing unit (Graphics Processing Unit, GPU) 10041 and a microphone 10042. The graphics processing unit 10041 performs processing on image data of a static picture or a video that is obtained by an image capturing apparatus (for example, a camera) in a video capturing mode or an image capturing mode. The display unit 1006 may include a display panel 10061. The display panel 10061 may be configured in the form of a liquid crystal display, an organic light-emitting diode, or the like. The user input unit 1007 includes a touch panel 10071 and another input device 10072. The touch panel 10071 is also called a touch screen. The touch panel 10071 may include two parts: a touch detection apparatus and a touch controller. The another input device 10072 may include, but is not limited to, a physical keyboard, a functional key (such as a volume control key or a switch key), a track ball, a mouse, and a joystick, which will not be repeated here.

In the embodiment of the present application, the radio frequency unit 1001 receives downlink data from a network-side device and then sends the downlink data to the processor 1010 for processing. In addition, uplink data is sent to the network-side device. Generally, the radio frequency unit 1001 includes, but is not limited to, an antenna, at least one amplifier, a transceiver, a coupler, a low noise amplifier, a duplexer, and the like.

The memory 1009 may be configured to store a software program or instruction and various pieces of data. The memory 1009 may mainly include a program or instruction storage area and a data storage area. The program or instruction storage area may store an operating system, an application program or instruction required by at least one function (such as, a sound playback function and an image display function), and the like. In addition, the memory 1009 may include a high-speed random access memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. For example, it is at least one magnetic disk storage device, a flash memory or another non-volatile solid-state storage device.

The processor 1010 may include one or more processing units. Optionally, the processor 1010 may integrate an application processor and a modem processor, where the application processor mainly processes an operating system, a user interface, an application program or instruction, or the like, and the modem processor mainly processes wireless communication, such as a baseband processor. It may be understood that the above modem processor may not be integrated into the processor 1010.

The radio frequency unit 1001 is configured to receive a sensing measurement task from a sensing server, and send first information to a first access network device. The first access network device is a service access network device for the terminal, the first information includes sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

In an implementation, the sensing assisted handover information includes at least one of the following: a frequency point of a sensing signal, the sensing signal being used for the terminal to execute the sensing measurement task; a first list, including at least one candidate frequency, the candidate frequency being a candidate target frequency of the terminal performing cell handover; a second list, including at least one candidate cell, the candidate cell being a candidate target cell of the terminal performing cell handover; a third list, including at least one first frequency, the first frequency being a frequency to which the terminal is prohibited from being handed over; a fourth list, including at least one second cell, the second cell being a cell to which the terminal is prohibited from being handed over; a data transmission rate reported by estimated sensing data, the sensing data corresponding to the sensing measurement task; and an address of the sensing server.

In an implementation, the second transmission module 910 is further configured to send second information to the first access network device, the second information being used for indicating that the sensing measurement task executed by the terminal ends.

In an implementation, the first information and/or the second information are/is transmitted through RRC UE assistance information.

In an implementation, the radio frequency unit 1001 is further configured to send third information to the sensing server in a case of completing target cell handover according to an RRC reconfiguration message from the first access network device, the third information at least carrying target cell information updated by the terminal.

In an implementation, the processor 1010 is further configured to receive fourth information from the sensing server, the fourth information including sensing measurement stop information or updated sensing measurement configuration; and stop executing the sensing measurement task according to the sensing measurement stop information, or execute the sensing measurement task according to the updated sensing measurement configuration.

In the embodiments of the present application, the first access network device acquires the first information including sensing measurement indication information and/or sensing assisted handover information, and performs cell handover according to the sensing measurement indication information and/or the sensing assisted handover information, therefore, the first access network device knows the sensing measurement task being executed on the terminal, thereby avoiding the problem of failing to ensure the continuity of sensing measurement services caused by cell handover of the terminal.

An embodiment of the present application further provides a network-side device, including a processor and a communication interface, the communication interface is coupled to the processor, and the processor is configured to run a program or instruction to implement steps of the methods in the embodiments 200 to 500. This embodiment of the network-side device corresponds to the above method embodiment of the network-side device, and the implementation processes and the implementations of the above method embodiment are applicable to this embodiment of the network-side device, which can achieve the same technical effects.

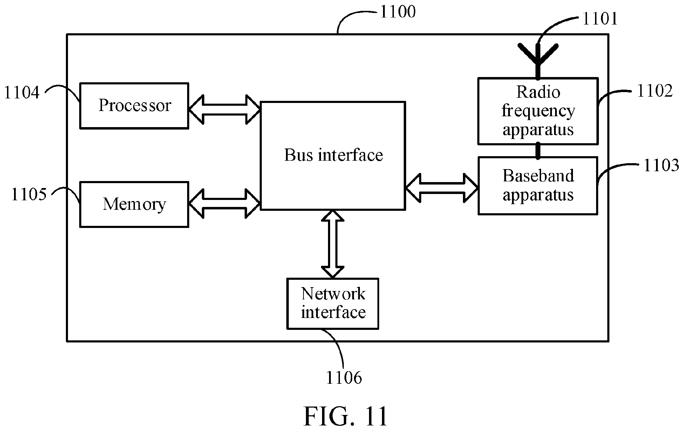

Specifically, an embodiment of the present application further provides a network-side device. As shown in FIG. 11, the network-side device 1100 includes: an antenna 1101, a radio frequency apparatus 1102 and a baseband apparatus 1103. The antenna 1101 is connected with the radio frequency apparatus 1102. In an uplink direction, the radio frequency apparatus 1102 receives information through the antenna 1101 and sends the received information to the baseband apparatus 1103 for processing. In a downlink direction, the baseband apparatus 1103 processes to-be-sent information and sends it to the radio frequency apparatus 1102, and the radio frequency apparatus 1102 processes the received information and then sends it out through the antenna 1101.

The above baseband processing apparatus may be located in the baseband apparatus 1103, the method executed by the network-side device in the above embodiment may be implemented in the baseband apparatus 1103, and the baseband apparatus 1103 includes a processor 1104 and a memory 1105.

The baseband apparatus 1103 may include, for example, at least one baseband board, a plurality of chips are arranged on the baseband board, as shown in FIG. 11, one of the chips may be, for example, the processor 1104, which is connected to the memory 1105 to call a program in the memory 1105 so as to execute operations of the network device shown in the above method embodiment.

The baseband apparatus 1103 may further include a network interface 1106, configured to interact information with the radio frequency apparatus 1102, and the interface is, for example, a common public radio interface (common public radio interface, CPRI for short).

Specifically, the network-side device in the embodiment of the present application further includes: an instruction or program stored on the memory 1105 and capable of running on the processor 1104. The processor 1104 calls the instruction or program in the memory 1105 to execute the method executed by the modules shown in FIG. 7 or FIG. 8, which achieves the same technical effects and is not repeated here for avoidance of repetition.

An embodiment of the present application further provides a readable storage medium, storing a program or instruction, and the program or instruction, when executed by a processor, implements the processes of the above handover method embodiments 200 to 600, which can achieve the same technical effects and will not be repeated here for avoidance of repetition.

The processor is the processor in the terminal in the above embodiment. The readable storage medium includes a computer readable storage medium, such as a computer read-only memory (Read-Only Memory, ROM).

An embodiment of the present application further provides a chip, the chip includes a processor and a communication interface, the communication interface is coupled to the processor, and the processor is configured to run a program or instruction of the network-side device to implement the processes of the above handover method embodiments 200 to 600, which can achieve the same technical effects and will not be repeated here for avoidance of repetition.

It is to be understood that the chip mentioned in the embodiment of the present application may also be called a system-level chip, a system chip, a chip system, a system-on-a-chip or the like.

An embodiment of the present application further provides a computer program product, including a processor, a memory, and a program or instruction stored on the memory and capable of running on the processor, and the program or instruction, when executed by the processor, implements the processes of the above handover method embodiments 200 to 600, which can achieve the same technical effects and will not be repeated here for avoidance of repetition.

It needs to be noted that, the term "include", "contain", or any other variation thereof herein is intended to cover a non-exclusive inclusion, so that a process, a method, an article or an apparatus including a series of elements not only includes those elements, but also includes other elements not listed clearly, or further includes elements inherent to the process, the method, the article or the apparatus. Without more limitations, elements defined by the sentence "including one..." do not exclude that there are still other same elements in the process, method, article, or apparatus including the elements. Besides, the scope of the method and the apparatus in implementations of the present application is not limited to executing functions according to a shown or discussed sequence, it may also include that functions are executed in a basically simultaneously mode or in an opposite sequence according to the involved functions, for example, the described method may be executed in an order different from the described one, and various steps may also be added, omitted, or combined. In addition, features described by reference to some examples may also be combined in other examples.

According to the descriptions in the foregoing implementations, those skilled in the art may clearly learn that the methods in the above embodiments may be implemented by relying on software and a necessary general-purpose hardware platform or certainly by using hardware, but in most of cases, the former is a preferred implementation. Based on such an understanding, the technical solutions of the present application essentially, or the part contributing to the prior art, may be presented in the form of a computer software product. The computer software product is stored in a storage medium (for example, an ROM/RAM, a magnetic disk, or an optical disc), including several instructions to enable a terminal (which may be a mobile phone, a computer, a server, an air-conditioner, a network device, or the like) to perform the methods described in the embodiments of the present application.

The embodiments of the present application have been described above with reference to the accompanying drawings. The present application is not limited to the specific implementations described above, and the specific implementations described above are only schematic and not limitative. Those ordinarily skilled in the art may make various variations under the teaching of the present application without departing from the spirit of the present application and the protection scope of the claims, and such variations shall all fall within the protection scope of the present application.

## Claims

1. A handover method, comprising:
a first access network device acquiring first information, wherein the first information comprises sensing measurement indication information and/or sensing assisted handover information, the sensing measurement indication information is used for indicating that a terminal is executing a sensing measurement task, the sensing assisted handover information is used for assisting the first access network device with performing cell handover for the terminal, and the first access network device is a service access network device for the terminal; and
the first access network device performing cell handover on the basis of the sensing measurement indication information and/or the sensing assisted handover information.

2. The method according to claim 1, wherein, the step of the first access network device acquiring the first information, comprises at least one of the following:
the first access network device receiving the first information from the terminal;
the first access network device receiving the first information from a sensing server; and
the first access network device receiving a first handover request message from a third access network device, the first handover request message comprising the first information.

3. The method according to claim 1 or 2, wherein, the sensing assisted handover information comprises at least one of the following:
a frequency point of a sensing signal, the sensing signal being used for the terminal to execute the sensing measurement task;
a first list, comprising at least one candidate frequency, the candidate frequency being a candidate target frequency of the terminal performing cell handover;
a second list, comprising at least one candidate cell, the candidate cell being a candidate target cell of the terminal performing cell handover;
a third list, comprising at least one first frequency, the first frequency being a frequency to which the terminal is prohibited from being handed over;
a fourth list, comprising at least one second cell, the second cell being a cell to which the terminal is prohibited from being handed over;
a data transmission rate reported by estimated sensing data, the sensing data corresponding to the sensing measurement task; and
an address of the sensing server.

4. The method according to claim 3, wherein, the step of the first access network device performing cell handover on the basis of the sensing measurement indication information and/or the sensing assisted handover information, comprises:
the first access network device determining a target cell on the basis of the sensing assisted handover information;
the first access network device sending a second handover request message to a second access network device to which the target cell belongs;
the first access network device receiving a handover request confirmation message fed back from the second access network device; and
the first access network device sending radio resource control (RRC) reconfiguration information to the terminal, the RRC reconfiguration information being used for the terminal to perform cell handover.

5. The method according to claim 4, before the step of the first access network device sending the second handover request message to the second access network device to which the target cell belongs, further comprising:
the first access network device determining radio resource management (RRM) measurement configuration information on the basis of the sensing assisted handover information.

6. The method according to claim 4, wherein, the second handover request message at least carries the sensing measurement indication information and/or the sensing assisted handover information.

7. The method according to claim 1, after the step of the first access network device acquiring the first information, further comprising:
the first access network device controlling the terminal to maintain an RRC connected state on the basis of the sensing measurement indication information.

8. The method according to claim 7, wherein, the step of the first access network device controlling the terminal to maintain the RRC connected state, comprises at least one of the following:
stopping an inactivity timer; and
ignoring timeout of the inactivity timer.

9. The method according to claim 1, after the step of the first access network device acquiring the first information, further comprising:
the first access network device acquiring second information, the second information being used for indicating that the sensing measurement task executed by the terminal ends.

10. The method according to claim 9, wherein, the first access network device receives the second information from a sensing server and/or the terminal.

11. The method according to claim 9, wherein, the first information and/or the second information are/is transmitted through RRC UE assistance information.

12. A cell handover method, comprising:
a sensing server sending first information to a first access network device in a case of sending a sensing measurement task message to a terminal;
wherein, the first access network device is a service access network device for the terminal, the first information comprises sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

13. The method according to claim 12, wherein, the sensing assisted handover information comprises at least one of the following:
a frequency point of a sensing signal, the sensing signal being used for the terminal to execute the sensing measurement task;
a first list, comprising at least one candidate frequency, the candidate frequency being a candidate target frequency of the terminal performing cell handover;
a second list, comprising at least one candidate cell, the candidate cell being a candidate target cell of the terminal performing cell handover;
a third list, comprising at least one first frequency, the first frequency being a frequency to which the terminal is prohibited from being handed over;
a fourth list, comprising at least one second cell, the second cell being a cell to which the terminal is prohibited from being handed over;
a data transmission rate reported by estimated sensing data, the sensing data corresponding to the sensing measurement task; and
an address of the sensing server.

14. The method according to claim 12 or 13, after the step of sending the first information to the first access network device, further comprising:
the sensing server sending second information to the first access network device, the second information being used for indicating that the sensing measurement task executed by the terminal ends.

15. The method according to claim 12 or 13, after the step of sending the first information to the first access network device, further comprising:
the sensing server receiving third information from the terminal or a second access network device, wherein the third information at least carries target cell information updated by the terminal, the first access network device is a source service access network device of the terminal, and the second access network device is a target service access network device of the terminal;
the sensing server determining updated sensing measurement configuration according to the target cell information, or determining whether the sensing measurement task is suitable for a target cell; and
the sensing server sending fourth information to the terminal, wherein the fourth information comprises sensing measurement stop information or the updated sensing measurement configuration.

16. A cell handover method, comprising:
a terminal receiving a sensing measurement task from a sensing server; and
the terminal sending first information to a first access network device;
wherein, the first access network device is a service access network device for the terminal, the first information comprises sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

17. The method according to claim 16, wherein, the sensing assisted handover information comprises at least one of the following:
a frequency point of a sensing signal, the sensing signal being used for the terminal to execute the sensing measurement task;
a first list, comprising at least one candidate frequency, the candidate frequency being a candidate target frequency of the terminal performing cell handover;
a second list, comprising at least one candidate cell, the candidate cell being a candidate target cell of the terminal performing cell handover;
a third list, comprising at least one first frequency, the first frequency being a frequency to which the terminal is prohibited from being handed over;
a fourth list, comprising at least one second cell, the second cell being a cell to which the terminal is prohibited from being handed over;
a data transmission rate reported by estimated sensing data, the sensing data corresponding to the sensing measurement task; and
an address of the sensing server.

18. The method according to claim 16, after the step of sending the first information to the first access network device, further comprising:
the terminal sending second information to the first access network device, the second information being used for indicating that the sensing measurement task executed by the terminal ends.

19. The method according to claim 18, wherein, the first information and/or the second information are/is transmitted through RRC UE assistance information.

20. The method according to claim 16, after the step of sending the first information to the first access network device, further comprising:
the terminal sending third information to the sensing server in a case of completing target cell handover according to an RRC reconfiguration message from the first access network device, the third information at least carrying target cell information updated by the terminal.

21. The method according to claim 20, after the step of sending the third information to the sensing server, further comprising:
receiving fourth information from the sensing server, the fourth information comprising sensing measurement stop information or updated sensing measurement configuration; and
the terminal stopping executing the sensing measurement task according to the sensing measurement stop information, or the terminal executing the sensing measurement task according to the updated sensing measurement configuration.

22. A handover apparatus, applied to a first access network device, and comprising:
an acquiring module, configured to acquire first information, wherein the first information comprises sensing measurement indication information and/or sensing assisted handover information, the sensing measurement indication information is used for indicating that a terminal is executing a sensing measurement task, the sensing assisted handover information is used for assisting the first access network device with performing cell handover for the terminal, and the first access network device is a service access network device for the terminal; and
a handover module, configured to perform cell handover on the basis of the sensing measurement indication information and/or the sensing assisted handover information.

23. The apparatus according to claim 22, wherein, the step of the acquiring module acquiring the first information, comprises at least one of the following:
the acquiring module receiving the first information from the terminal;
the acquiring module receiving the first information from a sensing server; and
the acquiring module receiving a first handover request message from a third access network device, the first handover request message comprising the first information.

24. The apparatus according to claim 22 or 23, wherein, the sensing assisted handover information comprises at least one of the following:
a frequency point of a sensing signal, the sensing signal being used for the terminal to execute the sensing measurement task;
a first list, comprising at least one candidate frequency, the candidate frequency being a candidate target frequency of the terminal performing cell handover;
a second list, comprising at least one candidate cell, the candidate cell being a candidate target cell of the terminal performing cell handover;
a third list, comprising at least one first frequency, the first frequency being a frequency to which the terminal is prohibited from being handed over;
a fourth list, comprising at least one second cell, the second cell being a cell to which the terminal is prohibited from being handed over;
a data transmission rate reported by estimated sensing data, the sensing data corresponding to the sensing measurement task; and
an address of the sensing server.

25. The apparatus according to claim 24, wherein, the step of the handover module performing cell handover on the basis of the sensing measurement indication information and/or the sensing assisted handover information, comprises:
the handover module determining a target cell on the basis of the sensing assisted handover information;
the handover module sending a second handover request message to a second access network device to which the target cell belongs;
the handover module receiving a handover request confirmation message fed back from the second access network device; and
the handover module sending radio resource control (RRC) reconfiguration information to the terminal, the RRC reconfiguration information being used for the terminal to perform cell handover.

26. The apparatus according to claim 25, wherein, the handover module is further configured to determine radio resource management (RRM) measurement configuration information on the basis of the sensing assisted handover information.

27. The apparatus according to claim 25, wherein, the second handover request message at least carries the sensing measurement indication information and/or the sensing assisted handover information.

28. The apparatus according to claim 22, wherein, the handover module is further configured to control the terminal to maintain a radio resource control (RRC) connected state on the basis of the sensing measurement indication information.

29. The apparatus according to claim 28, wherein, the step of the handover module controlling the terminal to maintain the RRC connected state, comprises at least one of the following:
stopping an inactivity timer; and
ignoring timeout of the inactivity timer.

30. The apparatus according to claim 22, wherein, the acquiring module is further configured to acquire second information, the second information being used for indicating that the sensing measurement task executed by the terminal ends.

31. The apparatus according to claim 30, wherein, the acquiring module receives the second information from a sensing server and/or the terminal.

32. The apparatus according to claim 30, wherein, the first information and/or the second information are/is transmitted through RRC UE assistance information.

33. A cell handover apparatus, applied to a sensing server, and comprising:
a first transmission module, configured to send first information to a first access network device in a case of sending a sensing measurement task message to a terminal;
wherein, the first access network device is a service access network device for the terminal, the first information comprises sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

34. The apparatus according to claim 33, wherein, the sensing assisted handover information comprises at least one of the following:
a frequency point of a sensing signal, the sensing signal being used for the terminal to execute the sensing measurement task;
a first list, comprising at least one candidate frequency, the candidate frequency being a candidate target frequency of the terminal performing cell handover;
a second list, comprising at least one candidate cell, the candidate cell being a candidate target cell of the terminal performing cell handover;
a third list, comprising at least one first frequency, the first frequency being a frequency to which the terminal is prohibited from being handed over;
a fourth list, comprising at least one second cell, the second cell being a cell to which the terminal is prohibited from being handed over;
a data transmission rate reported by estimated sensing data, the sensing data corresponding to the sensing measurement task; and
an address of the sensing server.

35. The apparatus according to claim 33 or 34, wherein, the first transmission module is further configured to send second information to the first access network device, the second information being used for indicating that the sensing measurement task executed by the terminal ends.

36. The apparatus according to claim 33 or 34, wherein, the first transmission module is further configured to receive third information from the terminal or a second access network device, wherein the third information at least carries target cell information updated by the terminal, the first access network device is a source service access network device of the terminal, and the second access network device is a target service access network device of the terminal;
the apparatus further comprises a determining module, configured to determine updated sensing measurement configuration according to the target cell information, or determine whether the sensing measurement task is suitable for a target cell; and
the first transmission module is further configured to send fourth information to the terminal, wherein the fourth information comprises sensing measurement stop information or the updated sensing measurement configuration.

37. A cell handover apparatus, applied to a terminal, and comprising:
a second transmission module, configured to receive a sensing measurement task from a sensing server, and
send first information to a first access network device;
wherein, the first access network device is a service access network device for the terminal, the first information comprises sensing measurement indication information and/or sensing assisted handover information, the sensing measurement indication information is used for indicating that the terminal is executing the sensing measurement task, and the sensing assisted handover information is used for assisting the first access network device with performing cell handover for the terminal.

38. The apparatus according to claim 37, wherein, the sensing assisted handover information comprises at least one of the following:
a frequency point of a sensing signal, the sensing signal being used for the terminal to execute the sensing measurement task;
a first list, comprising at least one candidate frequency, the candidate frequency being a candidate target frequency of the terminal performing cell handover;
a second list, comprising at least one candidate cell, the candidate cell being a candidate target cell of the terminal performing cell handover;
a third list, comprising at least one first frequency, the first frequency being a frequency to which the terminal is prohibited from being handed over;
a fourth list, comprising at least one second cell, the second cell being a cell to which the terminal is prohibited from being handed over;
a data transmission rate reported by estimated sensing data, the sensing data corresponding to the sensing measurement task; and
an address of the sensing server.

39. The apparatus according to claim 37, wherein, the second transmission module is further configured to send second information to the first access network device, the second information being used for indicating that the sensing measurement task executed by the terminal ends.

40. The apparatus according to claim 39, wherein, the first information and/or the second information are/is transmitted through RRC UE assistance information.

41. The apparatus according to claim 37, wherein, the second transmission module is further configured to send third information to the sensing server in a case of completing target cell handover according to an RRC reconfiguration message from the first access network device, the third information at least carrying target cell information updated by the terminal.

42. The apparatus according to claim 41, wherein, the second transmission module is further configured to receive fourth information from the sensing server, the fourth information comprising sensing measurement stop information or updated sensing measurement configuration; and stop executing the sensing measurement task according to the sensing measurement stop information, or execute the sensing measurement task according to the updated sensing measurement configuration.

43. A network-side device, comprising a processor, a memory and a program or instruction stored on the memory and capable of being run on the processor, the program or instruction, when executed by the processor, implementing steps of the handover method according to any one of claims 1 to 11, or implementing steps of the handover method according to any one of claims 12 to 15.

44. A terminal, comprising a processor, a memory and a program or instruction stored on the memory and capable of being run on the processor, the program or instruction, when executed by the processor, implementing steps of the handover method according to any one of claims 16 to 21.

45. A readable storage medium, storing a program or instruction, the program or instruction, when executed by a processor, implementing steps of the handover method according to any one of claims 1 to 11, or implementing steps of the handover method according to any one of claims 12 to 15, or implementing steps of the handover method according to any one of claims 16 to 21.
